# EUROPÄISCHE PATENTSCHRIFT

(11) **EP 4 065 349 B1**
(45) Veröffentlichungstag und Bekanntmachung des Hinweises auf die Patenterteilung: **27.12.2023**
(21) Anmeldenummer: 20812019.6
(22) Anmeldetag: 23.11.2020
(51) Int. Cl.: B29C 65/08

(54) **ULTRASCHALLBEARBEITUNGSVERFAHREN**
ULTRASONIC TREATMENT METHOD
PROCÉDÉ DE TRAITEMENT ULTRASONORE

(30) Priorität: 29.11.2019 DE 102019132559
(43) Veröffentlichungstag der Anmeldung: 05.10.2022
(73) Patentinhaber: Herrmann Ultraschalltechnik GmbH & Co. KG, 76307 Karlsbad (DE)
(72) Erfinder: WIPFLER, Thomas, 76275 Ettlingen (DE)
(74) Vertreter: WSL Patentanwälte Partnerschaft mbB
(86) Internationale Anmeldenummer: PCT/EP2020/083101
(87) Internationale Veröffentlichungsnummer: WO 2021/105068

(56) Entgegenhaltungen:
- EP-A1- 0 421 019
- EP-A2- 0 301 831
- EP-A2- 2 990 182
- US-A- 3 022 814
- US-A- 4 904 319
- US-A1- 2018 304 543

## Beschreibung

Die vorliegende Erfindung betrifft ein Verfahren zur Ultraschallbearbeitung eines Kunststoffmaterials mit den Schritten:
A) Positionieren des Kunststoffmaterials zwischen einer Sonotrode und einem Gegenwerkzeug,
B) In-Kontakt-Bringen der mit einer Ultraschallschwingung angeregten Sonotrode mit dem Kunststoffmaterial während einer Schweißphase und
C) Aufeinander-Zu-Bewegen von Sonotrode und Gegenwerkzeug, während einer Haltephase, in welcher weder Sonotrode noch Gegenwerkzeug mit einer Ultraschallschwingung angeregt werden, so dass eine Kraft F auf das Kunststoffmaterial aufgebracht wird.

Ein solches Ultraschallbearbeitungsverfahren ist grundsätzlich bekannt. Dabei wird eine stoffschlüssige Verbindung von Kunststoffmaterialteilen hergestellt. Die Kunststoffmaterialteile werden zwischen der Sonotrode und dem Gegenwerkzeug positioniert. Die Sonotrode wird mit einer Ultraschallschwingung angeregt, so dass longitudinale Schwingungen mit Frequenzen von z.B. 20 kHz und Schwingungsamplituden von z. B. 5 µm bis 50 µm von der Sonotrode in die Kunststoffmaterialteile eingeleitet wird. Je nach Anwendung wird zwischen Sonotrode und Kunststoffmaterial oder zwischen den sich berührenden Kunststoffmaterialteilen durch Reibung aber auch innerhalb der Molekülketten Wärme erzeugt, welche das Material aufschmelzen lässt.

Das Ultraschallschweißen wird insbesondere verwendet um Spritzgussteile zu fügen, unterschiedliche Materialien miteinander zu vernieten und formschlüssige Verbindungen durch Bördelung herzustellen.

In der Regel werden in der Schweißphase, in welcher die Sonotrode und ggf. auch das Gegenwerkzeug mit einer Ultraschallschwingung angeregt sind, Sonotrode und Gegenwerkzeug aufeinander zu bewegt, während das zu bearbeitende Kunststoffmaterial zwischen Gegenwerkzeug und Sonotrode angeordnet ist.

Während der Schweißphase wird daher von der Sonotrode und ggf. auch von dem Gegenwerkzeug eine Ultraschallschwingung auf das Material aufgebracht, während sich die beiden Elemente, die Sonotrode und das Gegenwerkzeug, aufeinander zu bewegen.

Dabei wird die Kraft mit der die Sonotrode auf das Kunststoffmaterial drückt und/oder der Weg, den die Sonotrode in Richtung des Gegenwerkzeuges zurücklegt, in der Schweißphase kontrolliert. Durch die Anpassung und Variation der Prozessparameter, wie z.B. Kraft auf das Material, Vorschubgeschwindigkeit der Sonotrode oder Materialtemperatur, kann der Bearbeitungsprozess und die Qualität der Schweißverbindung beeinflusst werden.

Am Ende der Schweißphase wird die Anregung mittels Ultraschall abgeschaltet. Das durch die Ultraschallbearbeitung aufgeschmolzene Material wird dann wieder in den festen Zustand übergehen.

Es ist bereits bekannt, an die Schweißphase eine Haltephase anzuschließen, in welcher die Sonotrode in Richtung des Gegenwerkzeuges mit einer konstanten Kraft F auf das Material drückt. Dadurch wird verhindert, dass sich die Materialteile wieder voneinander lösen, bevor das Material wieder erstarrt ist.

In der US 2018/304543 A1 wird beispielsweise ein Verfahren zur mechanischen Befestigung eines ersten Bauteils mit thermoplastischen Material an einem zweiten Bauteil beschrieben, wobei das thermoplastische Material durch Einbringung von Vibrationen und der damit verbundenen Erzeugung von Reibungswärme geschmolzen wird, sodass eine Verbindung mit dem zweiten Bauteil entsteht, wenn das thermoplastische Material in einer an die Aufschmelzung anschließenden Abkühlphase wieder verfestigt wird. Ähnliche Verfahren sind auch aus der EP 0 301 831 A2, der EP 2 990 182 A2, der EP 0 421 019 A1, der US 3 022 814 A sowie der US 4 904 319 A bekannt.

Das Vorsehen einer Haltephase verlängert allerdings die Bearbeitungszeit, in welcher die Sonotrode und das Gegenwerkzeug mit dem Material in Kontakt sind. Sonotrode und Gegenwerkzeug stehen daher während der Haltephase nicht für die Schweißbearbeitung von weiteren Materialteilen zur Verfügung.

Es ist ein ständiges Ziel bei der Ultraschallbearbeitung die Bearbeitungszeiten zu reduzieren, wobei zugleich die Qualität des Schweißvorgangs nicht beeinträchtigt oder sogar verbessert werden soll.

Erfindungsgemäß wird diese Aufgabe dadurch gelöst, dass während der Haltephase in Schritt C) die Kraft F variiert wird und dass in Schritt C) eine Steuerung oder Regelung der Aufeinander-Zu-Bewegung von Sonotrode und Gegenwerkzeug erfolgt. Es hat sich gezeigt, dass die Haltephase nicht nur dem Abwarten bis zur Erstarrung des Materials dienen muss, sondern auch in der Haltephase, in welcher keine Ultraschallschwingung mehr in das Material eingebracht wird, der Erstarrungsprozess und damit die Schweißverbindung beeinflusst werden kann. Durch die Variation der Kraft F kann gezielt auf die flüssigen Bestandteile eingewirkt werden und der Erstarrungsprozess gelenkt werden.

In den meisten Fällen ist eine Erhöhung der Kraft F innerhalb der Haltephase von Vorteil. Die auf das Material aufgebrachte Kraft unterstützt den Übergang von der flüssigen Phase in die feste Phase aufgrund des höheren Druckes im Material. Zudem wird die Verschlaufung durch Relaxation der Polymerketten unterstützt, was eine gute Verbindung bewirkt.

Mit zunehmender Verfestigung des Materials wird jedoch ein höherer Gegendruck durch das Material bereitgestellt. Durch die Erhöhung der aufgebrachten Kraft F während des Erstarrungsvorganges wird sichergestellt, dass auch mit zunehmender Erstarrung eine ausreichende Kraft an den noch flüssigen Bestandteilen des Materials bereitgestellt wird, um die Erstarrung dieser Bereiche zu beschleunigen und zu verbessern.

Mit der vorliegenden Erfindung wird erstmalig das Augenmerk auf die Haltephase gelegt. Durch die Variation und insbesondere die Erhöhung der Kraft in der Haltephase kann der Erstarrungsprozess sowie die Qualität der Schweißverbindung überraschenderweise deutlich beeinflusst werden.

In einer bevorzugten Ausführungsform der Erfindung erfolgt in Schritt C) eine Regelung der Aufeinander-Zu-Bewegung von Sonotrode und Gegenwerkzeug.

Beispielsweise kann eine Regelung erfolgen, indem ein IST-Druck, mit welchem Sonotrode und Gegenwerkzeug aufeinander zu bewegt werden, gemessen, mit einem SOLL-Druck verglichen und die Aufeinander-Zu-Bewegung in Abhängigkeit von der Differenz zwischen IST-Druck und SOLL-Druck verändert wird. Dabei kann der IST-Druck der hydraulische oder pneumatische Druck einer Zustelleinrichtung sein, die Sonotrode und Gegenwerkzeug aufeinander zu bewegt.

Alternativ kann eine Regelung erfolgen, indem die IST-Kraft F gemessen, mit einer SOLL-Kraft verglichen und die Aufeinander-Zu-Bewegung in Abhängigkeit von der Differenz zwischen IST-Kraft und SOLL-Kraft verändert wird.

Beispielsweise kann die SOLL-Kraft eine zeitabhängige Funktion sein, welche mit der Zeit ansteigt. Dabei kann die Kraft zwischenzeitlich auch wieder geringer gewählt werden. Wesentlich ist aber, dass die Kraft F zu einem Zeitpunkt t₂, der nach dem Zeitpunkt t₁ liegt, größer als die Kraft F zu dem Zeitpunkt t₁ ist. In einer bevorzugten Ausführungsform wird eine monoton ansteigende Funktion als SOLL-Kraft gewählt, d.h. die Kraft F wird innerhalb der Haltephase nicht reduziert.

Es ist allerdings zu berücksichtigen, dass im Anschluss an die Haltephase, die Sonotrode wieder von dem Gegenwerkzeug wegbewegt werden muss, um die verschweißten Materialteile zu entnehmen und die nächsten zu bearbeitenden Materialteile zwischen Sonotrode und Gegenwerkzeug zu positionieren. Diese Öffnungsphase beginnt mit einer abrupten Reduzierung der Kraft F, da die Bewegungsrichtung der Sonotrode umgekehrt wird. Die Öffnungsphase ist nicht Teil der Haltephase, sondern schließt sich an diese an.

In einer weiteren bevorzugten Ausführungsform ist vorgesehen, dass die Regelung der Aufeinander-Zu-Bewegung von Sonotrode und Gegenwerkzeug derart erfolgt, dass der IST-Abstand d von Sonotrode oder Gegenwerkzeug gemessen, mit einem SOLL-Abstand verglichen und die Aufeinander- Zu-Bewegung in Abhängigkeit von der Differenz zwischen IST-Abstand und SOLL-Abstand verändert wird.

Der IST-Abstand kann entweder direkt gemessen werden oder indirekt, indem beispielsweise die Position der Sonotrode gemessen wird, woraus sich der Abstand zu dem stationären Gegenwerkzeug ergibt. Es ist dabei nicht notwendig, den Abstand zu berechnen. Da sich der IST-Abstand d von der Position der Sonotrode lediglich durch einen Subtrahenden unterscheidet, genügt es, die Position der Sonotrode zu messen und mit einer SOLL-Position der Sonotrode zu vergleichen.

Beispielsweise kann der SOLL-Abstand eine mit der Zeit monoton fallenden Funktion sein.

In einer weiteren besonders bevorzugten Ausführungsform wird als SOLL-Abstand eine Funktion gewählt, deren Ableitung nach der Zeit konstant ist.

Dadurch ist sichergestellt, dass sich der Abstand mit konstanter Geschwindigkeit verringert.

Die Veränderung der Aufeinander-Zu-Bewegung kann in Abhängigkeit von der Differenz zwischen IST-Abstand und SOLL-Abstand durch Variation der Kraft, mit welcher Sonotrode und Gegenwerkzeug auf das zu bearbeitende Material drücken, erfolgen.

Weitere Vorteile, Merkmale und Anwendungsmöglichkeiten der vorliegenden Erfindung werden deutlich anhand der folgenden Beschreibung einer bevorzugten Ausführungsform und der zugehörigen Figur. Es zeigt:

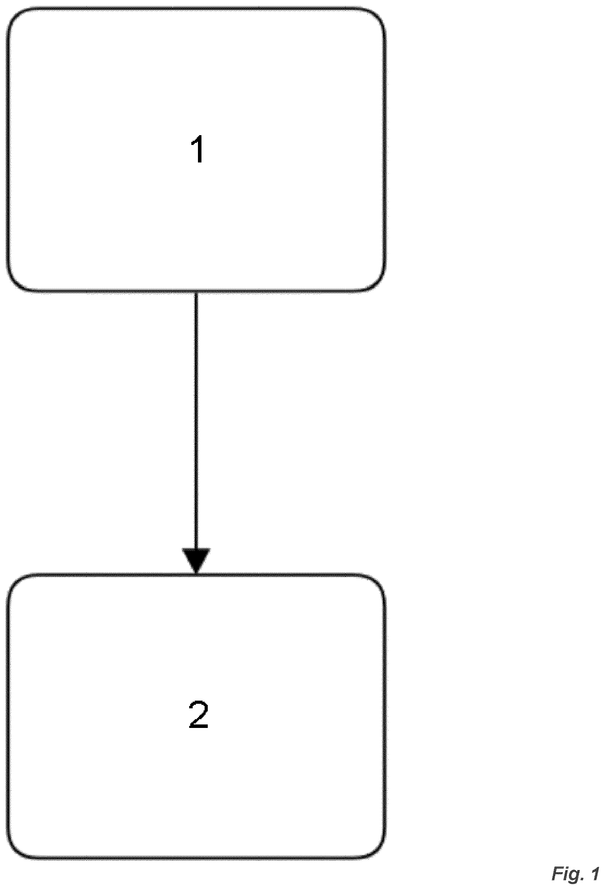

Figur 1 ein Ablaufdiagramm des erfindungsgemäßen Verfahrens.

Das erfindungsgemäße Ultraschallbearbeitungsverfahren besteht aus zwei Phasen, der Schweißphase 1 und der Haltephase 2. Während der Schweißphase wird das zu bearbeitende Material mit einer mit Hochfrequenz schwingenden Sonotrode in Kontakt gebracht.

Insbesondere dann, wenn das Material aus verschiedenen Materialteilen besteht, kommt es an der Berührungsfläche zwischen den Materialteilen zu hochfrequenten Reibungseffekten, die lokal zu einer Materialerhitzung führen, sodass das Polymermaterial aufschmilzt. Sobald das Aufschmelzen in genügendem Umfang erfolgt ist, wird die Schweißphase beendet, d.h. die Ultraschallanregung der Sonotrode und gegebenenfalls auch des Gegenwerkzeuges wird beendet.

Grundsätzlich kann das Werkstück nun aus der Ultraschallschweißanlage entfernt werden. Allerdings zeigt das Polymermaterial an den geschmolzenen Abschnitten noch eine hohe Beweglichkeit, sodass sich die Materialteile eventuell wieder lösen können. Daher wird abgewartet, bis die Polymerschmelze wieder erstarrt ist. In dieser sogenannten Haltephase 2 wird eine Kraft von der Sonotrode auf das zu bearbeitende Material ausgeübt.

Während der Haltephase kommt es zu einer Erstarrung der flüssigen Bestandteile des Polymermaterials. Dies erfolgt jedoch nicht gleichmäßig über alle flüssigen Bestandteile, sondern abschnittsweise nach und nach. Der Erstarrungsvorgang kann dadurch beschleunigt werden, dass die Kraft, die von der Sonotrode in der Haltephase 2 auf das Material aufgebracht wird, stetig ansteigt.

Mit zunehmender Erstarrung der flüssigen Abschnitte, steigt der Widerstand, den das Material der Sonotrode entgegensetzt, an. Um den Erstarrungsvorgang weiterhin zu beschleunigen und eine bessere Verschlaufung innerhalb der Polymerketten zu bewirken, wird daher erfindungsgemäß die Kraft in der Haltephase nicht konstant gehalten, sondern variiert und zwar am besten erhöht.

In der besonders bevorzugten Ausführungsform geschieht dies dadurch, dass die Relativposition zwischen Sonotrode und Gegenwerkzeug gemessen wird und der Abstand zwischen Sonotrode und Gegenwerkzeug mit konstanter Geschwindigkeit reduziert wird. Am Ende der Haltephase sind dann im Wesentlichen alle durch die Ultraschallbearbeitung verflüssigten Polymerbereiche wieder erstarrt, sodass Sonotrode und Amboss wieder voneinander wegbewegt werden können, um das Material zu entnehmen und das nächste zu bearbeitende Materialstück zwischen Sonotrode einerseits und Gegenwerkzeug andererseits anzuordnen.

### Bezugszeichen

- 1: Schweißphase
- 2: Haltephase

## Patentansprüche

1. Verfahren zur Ultraschallbearbeitung eines Kunststoffmaterials mit den Schritten:
A) Positionieren des Kunststoffmaterials zwischen einer Sonotrode und einem Gegenwerkzeug,
B) In-Kontakt-Bringen der mit einer Ultraschallschwingung angeregten Sonotrode mit dem Kunststoffmaterial während einer Schweißphase,
C) Aufeinander-Zu-Bewegen von Sonotrode und Gegenwerkzeug, während einer Haltephase, in welcher weder Sonotrode noch Gegenwerkzeug mit einer Ultraschallschwingung angeregt werden, so dass eine Kraft F auf das Kunststoffmaterial aufgebracht wird, wobei während der Haltephase in Schritt C) die Kraft F variiert wird,
**dadurch gekennzeichnet, dass**
in Schritt C) eine Steuerung oder Regelung der Aufeinander-Zu-Bewegung von Sonotrode und Gegenwerkzeug erfolgt.

2. Verfahren nach Anspruch 1, **dadurch gekennzeichnet, dass** während der Haltephase in Schritt C) die Kraft erhöht wird.

3. Verfahren nach Anspruch 1 oder 2, **dadurch gekennzeichnet, dass** in Schritt C) eine Regelung der Aufeinander-Zu-Bewegung von Sonotrode und Gegenwerkzeug erfolgt.

4. Verfahren nach Anspruch 1, **dadurch gekennzeichnet, dass** in Schritt C) eine Regelung der Aufeinander-Zu-Bewegung von Sonotrode und Gegenwerkzeug erfolgt, indem ein IST-Druck, mit welchen Sonotrode und Gegenwerkzeug aufeinander zu bewegt werden, gemessen, mit einem SOLL-Druck verglichen und die Aufeinander-Zu-Bewegung in Abhängigkeit von der Differenz zwischen IST-Druck und SOLL-Druck verändert wird.

5. Verfahren nach Anspruch 1, **dadurch gekennzeichnet, dass** in Schritt C) eine Regelung der Aufeinander-Zu-Bewegung von Sonotrode und Gegenwerkzeug erfolgt, indem eine IST-Kraft F gemessen, mit einer SOLL-Kraft verglichen und die Aufeinander-Zu-Bewegung in Abhängigkeit von der Differenz zwischen IST-Kraft und SOLL-Kraft verändert wird.

6. Verfahren nach Anspruch 1, **dadurch gekennzeichnet, dass** in Schritt C) eine Regelung der Aufeinander-Zu-Bewegung von Sonotrode und Gegenwerkzeug erfolgt, indem der IST-Abstand d von Sonotrode oder Gegenwerkzeug gemessen, mit einem SOLL-Abstand verglichen und die Aufeinander-Zu-Bewegung in Abhängigkeit von der Differenz zwischen IST-Abstand und Soll-Abstand verändert wird.

7. Verfahren nach Anspruch 6, **dadurch gekennzeichnet, dass** als SOLL-Abstand eine mit der Zeit monoton fallende Funktion gewählt wird.

8. Verfahren nach Anspruch 7, **dadurch gekennzeichnet, dass** als SOLL-Abstand eine Funktion gewählt wird, deren Ableitung nach der Zeit konstant ist.

## Claims

1. Method for ultrasonic treatment of a plastic material comprising the steps:
A) positioning the plastic material between a sonotrode and a counter tool,
B) bringing the sonotrode, which is excited with an ultrasonic oscillation, into contact with the plastic material during a welding phase,
C) moving the sonotrode and the counter tool toward one another during a holding phase, in which neither the sonotrode nor counter tool are excited with an ultrasonic oscillation so that a force F is applied to the plastic material, wherein the force F is varied during the holding phase in step C),
**characterised in that**
the movement of the sonotrode and the counter tool toward one another is controlled or regulated in step C).

2. Method according to claim 1, **characterised in that** the force is increased during the holding phase in step C).

3. Method according to claim 1 or 2, **characterised in that** the movement of the sonotrode and the counter tool toward one another is regulated in step C).

4. Method according to claim 1, **characterised in that** the movement of the sonotrode and the counter tool toward one another is regulated in step C) by measuring an ACTUAL pressure with which the sonotrode and the counter tool are moved toward one another, comparing said ACTUAL pressure with a TARGET pressure and changing the movement toward one another as a function of the difference between the ACTUAL pressure and the TARGET pressure.

5. Method according to claim 1, **characterised in that** the movement of the sonotrode and the counter tool toward one another is regulated in step C) by measuring an ACTUAL force F, comparing said ACTUAL force with a TARGET force and changing the movement toward one another as a function of the difference between the ACTUAL force and the TARGET force.

6. Method according to claim 1, **characterised in that** the movement of the sonotrode and the counter tool toward one another is regulated in step C) by measuring an ACTUAL distance d of the sonotrode or the counter tool, comparing said ACTUAL distance with a TARGET distance and changing the movement toward one another as a function of the difference between the ACTUAL distance and the TARGET distance.

7. Method according to claim 6, **characterised in that** a function which decreases monotonically over time is selected as the TARGET distance.

8. Method according to claim 7, **characterised in that** a function whose derivative is constant over time is selected as the TARGET distance.

## Revendications

1. Procédé de traitement par ultrasons d'une matière plastique, comprenant les étapes consistant à :
A) positionner la matière plastique entre une sonotrode et un contre-outil,
B) mettre en contact la sonotrode excitée à l'aide d'une vibration ultrasonore avec la matière plastique pendant une phase de soudage,
C) déplacer la sonotrode et le contre-outil l'un vers l'autre pendant une phase inactive, pendant laquelle ni la sonotrode ni le contre-outil n'est excité par une vibration ultrasonore, de telle sorte qu'une force F est appliquée sur la matière plastique alors que l'on fait varier la force F lors de la phase inactive de l'étape c),
**caractérisé en ce que**
lors de l'étape C), on réalise une commande ou une régulation du déplacement l'un vers l'autre de la sonotrode et du contre-outil.

2. Procédé selon la revendication 1, **caractérisé en ce que** lors de la phase inactive de l'étape C), on augmente la force.

3. Procédé selon la revendication 1 ou 2, **caractérisé en ce que** lors de l'étape C), on réalise une régulation du déplacement de la sonotrode et du contre-outil l'un vers l'autre.

4. Procédé selon la revendication 1, **caractérisé en ce que** lors de l'étape C), on réalise une régulation du déplacement de la sonotrode et du contre-outil l'un vers l'autre **en ce que** l'on mesure une pression effective avec laquelle la sonotrode et le contre-outil sont déplacés l'un vers l'autre, on la compare à une pression de consigne, et on modifie le déplacement l'un vers l'autre en fonction de la différence entre la pression effective et la pression de consigne.

5. Procédé selon la revendication 1, **caractérisé en ce que** lors de l'étape C), on réalise une régulation du déplacement de la sonotrode et du contre-outil l'un vers l'autre **en ce que** l'on mesure une force effective F, on la compare à une force de consigne, et on modifie le déplacement l'un vers l'autre en fonction de la différence entre la force effective et la force de consigne.

6. Procédé selon la revendication 1, **caractérisé en ce que** lors de l'étape C), on réalise une régulation du déplacement de la sonotrode et du contre-outil l'un vers l'autre **en ce que** l'on mesure la distance effective d entre la sonotrode et le contre-outil, on la compare à une distance de consigne, et on modifie le déplacement l'un vers l'autre en fonction de la différence entre la distance effective et la distance de consigne.

7. Procédé selon la revendication 6, **caractérisé en ce que** l'on sélectionne en tant que distance de consigne une fonction monotone décroissante.

8. Procédé selon la revendication 7, **caractérisé en ce que** l'on sélectionne en tant que distance de consigne une fonction dont la dérivée temporelle est constante.
